# EUROPEAN PATENT APPLICATION

(11) **EP 4 379 453 A1**
(43) Date of publication of application: **05.06.2024**
(21) Application number: 23210543.7
(22) Date of filing: 17.11.2023
(51) Int. Cl.: G02B 27/01, B60K 35/232, B60K 35/233

(54) **DISPLAY SYSTEM, DISPLAY CONTROL METHOD, AND STORAGE MEDIUM**

(30) Priority: 25.11.2022 JP 2022187890
(71) Applicant: CANON KABUSHIKI KAISHA, Tokyo 146-8501 (JP)
(72) Inventor: NAKAGAWA, Ryo, Tokyo, 146-8501 (JP); YAGI, Masaya, Tokyo, 146-8501 (JP); KAWAKAMI, Hiroyo, Tokyo, 146-8501 (JP)
(74) Representative: TBK

(57) **Abstract**

A display system comprising: a head-up display that projects a display image on a light-reflecting portion and displays a virtual image by light reflected on the light-reflecting portion; a display space determination unit configured to determine a display space of the virtual image displayed by the head-up display; and an image processing unit configured to correct the display image based on perspective according to an inclination angle in a depth direction of the display space.

## Description

### BACKGROUND OF THE INVENTION

### Field of the Invention

The present invention relates to a display system such as a head-up display, a display control method, a storage medium, and the like.

### Description of the Related Art

A head-up display (HUD) that displays a virtual image superimposed on a foreground of a vehicle by projecting a video image onto a projection member on a front window (windshield) and the like is known. Some HUDs control the focus position of a virtual image, thereby making an observer perceive a sense of distance (a sense of depth).

For example, Japanese Patent Application Laid-Open No. 2019-56840 discloses an HUD system capable of changing a projection distance of a virtual image by changing a distance and an inclination angle of an optical member.

However, in the prior art disclosed in the above Japanese Patent Application Laid-Open No. 2019-56840, when an obstacle is present between the display position of a virtual image and a driver, the virtual image may overlap with the obstacle located in the forward direction, resulting in a display with a sense of discomfort.

### SUMMARY OF THE INVENTION

A display system of one aspect of the invention comprises: a head-up display that projects a display image on a light-reflecting portion and displays a virtual image by light reflected on the light-reflecting portion; and at least one processor or circuit configured to function as: a display space determination unit configured to determine a display space of the virtual image displayed by the head-up display; and an image processing unit configured to correct the display image based on perspective according to an inclination angle in a depth direction of the display space.

Further features of the present invention will become apparent from the following description of embodiments with reference to the attached drawings.

### BRIEF DESCRIPTION OF THE DRAWINGS

FIG. 1 is a schematic view of a multifocal HUD device according to the first embodiment of the present invention.
FIG. 2 is a functional block diagram illustrating an overview of a HUD system according to a first embodiment.
FIGS. 3A to 3C are schematic diagrams for explaining the prior art and the first embodiment.
FIG. 4 is a flowchart illustrating an operation example of a display control method for a HUD device according to the first embodiment.
FIG. 5 is a schematic diagram of a multifocal HUD device according to the second embodiment.
FIG. 6 is a diagram that explains the operation of the HUD device according to the second embodiment.
FIG. 7 is a flowchart illustrating an operation example of a display control method for the HUD device according to the second embodiment.
FIG. 8 is a flowchart illustrating an operation example of a display control method for the HUD device according to the third embodiment.
FIG. 9 is a flowchart showing a continuation of FIG. 8.
FIGS. 10A to 10B are diagrams that explain an example of emphasizing perspective of a virtual image 301 based on perspective.

### DESCRIPTION OF THE EMBODIMENTS

Hereinafter, with reference to the accompanying drawings, favorable modes of the present invention will be described using Embodiments. In each diagram, the same reference signs are applied to the same members or elements, and duplicate description will be omitted or simplified.

### [First Embodiment]

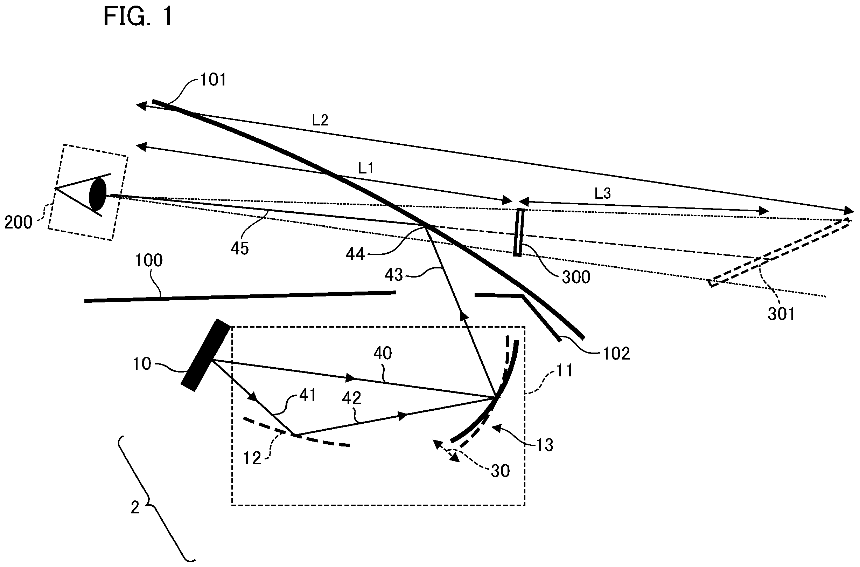

FIG. 1 is a schematic view of a multifocal HUD device according to the first embodiment of the present invention, and a configuration in which a focus length is switched and displayed in an HUD device 2 that is mounted on an automobile will be described with reference to FIG. 1.

Although, in the embodiment, an example in which the HUD device 2 serving as a display system is mounted on an automobile serving as a movable apparatus will be explained, the movable apparatus is not limited to an automobile. The movable apparatus may be, for example, an aircraft.

In FIG. 1, parts of the automobile such as an exterior portion 100, a windshield 101 that is a front glass window, and a dashboard 102 that is an in-vehicle structure are illustrated to simplify the description, and the HUD device 2 is disposed inside the dashboard 102.

The HUD device 2 is disposed to project an image displayed on a display device 10 toward the windshield 101 from below by a projection unit 11.

Additionally, the HUD device 2 that is a head-up display according to the first embodiment is configured to project a display image on a light reflection unit and display a virtual image by light that is reflected by the light reflection unit.

Next, a display device 10 will be described in detail. The display device 10 is a light source of display light that is configured to project an image of a projection source projected by the projection unit 11 as display light onto the projection unit 11. The display device 10 of the first embodiment is configured by a liquid crystal panel, a backlight, a lens, and the like (not illustrated).

The liquid crystal panel has a pixel group capable of controlling transmission and non-transmission of light. The liquid crystal panel is disposed in the forward direction of illumination of a backlight that is a light source device using a light emitting diode and the like, and is configured to be able to display a desired projection source image by selectively transmitting illumination light of the backlight for each pixel.

The lens is disposed between the liquid crystal display panel and the backlight, and uniformly irradiates the liquid crystal display panel with illumination light from the backlight. Further, the display device 10 includes an optical element (not illustrated) that controls the optical axis direction, and thereby the optical axis direction can be switched between two directions of an optical axis 40 and an optical axis 41.

Next, the projection unit 11 will be explained. The projection unit 11 is an optical system for projecting an image as a projected image formed by the above-described display device 10 toward the windshield 101, and is configured by a first reflection mirror 12 and a second reflection mirror 13 serving as light reflection units. The first reflection mirror 12 and the second reflection mirror 13 reflect light projected from the display device 10 to project a virtual image 300 or a virtual image 301.

Among the projection directions of the display image of the display device 10, the optical axis that displays the virtual image 300 at the near side is indicated as the optical axis 40. At the projection destination of the display image from the display device 10, the second reflection mirror 13 is disposed so as to reflect the optical axis 40 in the direction of the windshield 101, that is, in the direction indicated by an optical axis 43, and the projected image of the display device 10 is enlarged at a predetermined magnification and distortion is corrected.

That is, the image displayed on the display device 10 is reflected as a projected image along the optical axis 40 by the second reflection mirror 13, and the projected image is projected toward the windshield 101 along the optical axis 43. The projected image that is projected toward the windshield 101 is reflected by a reflection portion 44 at which the optical axis 43 and the windshield 101 intersect with each other, and is guided toward an eye box 200.

The projected optical axis reflected by the reflection portion 44 is indicated as an optical axis 45. When the pupil of the user is within the range of the eye box 200, the projected image can be visually recognized as the virtual image 300 in a space at the distance L1 from the eye box 200.

In contrast, among the projection directions of the display image of the display device 10, the optical axis that displays the virtual image 301 at the far side is indicated as the optical axis 41. At the projection destination of the display image from the display device 10, the first reflection mirror 12 is disposed so as to reflect the optical axis 41 in the direction of the second reflection mirror 13, that is, in the direction indicated by an optical axis 42.

The second reflection mirror 13 is disposed so as to reflect the optical axis 42 reflected by the first reflection mirror 12 in the direction of the windshield 101, that is, in the direction indicated by the optical axis 43, and the projected image of the display device 10 is enlarged at a predetermined magnification and distortion is corrected.

That is, the image displayed on the display device 10 is reflected along the optical axis 41 by the first reflection mirror 12, and reflected by the second reflection mirror 13 along the optical axis 41 as a projected image. The projected image reflected by the second reflection mirror 13 is projected toward the windshield 101 along the optical axis 42. The projected image projected toward the windshield 101 is reflected by the reflection portion 44 at which the optical axis 45 and the windshield 101 intersect with each other, and is guided toward the eye box 200.

In addition, when the pupil of the user is within the range of the eye box 200, the projected image can be visually recognized as a virtual image 301 in a space at the distance L2 from the eye box 200. Note that in FIG. 1, the distance L2 indicates a distance between the pupil of the user and the upper end of the display region of the projected image.

Accordingly, the distance between the pupil of the user and the lower end of the display region of the projected image is shorter than the distance L2. Here, the virtual image 301 is displayed in an inclined manner, and it is possible to display the range of L3 between the virtual image 300 and the virtual image 301 while gradually changing the inclination angle by changing a mirror angle 30 based on the output of a display driving unit 25 to be described below. Note that it is assumed that the inclination angle in the first embodiment is an angle with respect to the horizontal or the ground.

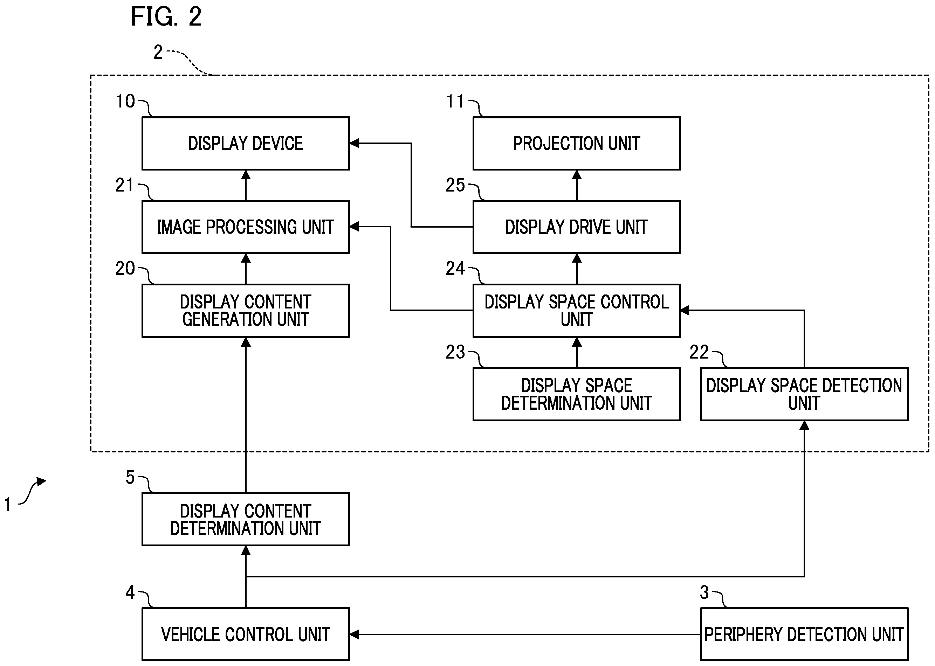

FIG. 2 is a functional block diagram showing an outline of the HUD system according to the first embodiment. Note that a part of the functional block as shown in FIG. 2 is realized by causing a CPU and the like serving as a computer (not illustrated) included in the HUD system to execute a computer program stored in a memory serving as a storage medium (not illustrated).

However, a part or all of them may be realized by hardware. As the hardware, a dedicated circuit (ASIC), a processor (reconfigurable processor, DSP), and the like can be used. Additionally, each of the functional blocks as shown in FIG. 2 need not necessarily be incorporated in the same housing, and may be configured by separate devices that are connected to each other via a signal path.

An HUD system 1 serving as a display system in the first embodiment is mounted on an automobile serving as a movable apparatus, and includes a periphery detection unit 3, a vehicle control unit 4, and a display content determination unit 5 together with an HUD device 2. The periphery detection unit 3 detects an object around one's own vehicle and measures a distance and a direction from one's own vehicle.

The periphery detection unit 3 includes a radar, a sonar, a light detection and ranging (LiDAR), a camera having an imaging plane phase-difference type imaging element, a device that estimates distances based on object recognition results from captured images, or a stereo camera, and the like.

The vehicle control unit 4 performs management of control information from the periphery detection unit 3 and one's own vehicle control system (not illustrated), and performs driving control of the vehicle, and has, for example, an engine control unit (ECU). The display content determination unit 5 determines content to be displayed explained on the HUD device 2 based on information from the vehicle control unit 4.

The configuration of the HUD apparatus 2 in FIG. 2 will be explained. The HUD device 2 is configured by the display device 10, the projection unit 11, a display image generation unit 20, an image processing unit 21, a display space detection unit 22, a display space determination unit 23, a display space control unit 24, a display driving unit 25, and the like.

The display image generation unit 20 generates a display image to be displayed on the display device 10 based on information on the display content determination unit 5. For example, speed information, peripheral information of the vehicle, and the like are transmitted from the display content determination unit 5, and the display image generation unit 20 generates a display image based on the received information.

The image processing unit 21 performs image processing based on the image generated by the display image generation unit 20 and the display space control information from the display space control unit 24, and supplies the processed image to the display device 10. That is, the image processing unit 21 performs image processing on the display image.

Note that the image processing includes, for example, a projection transformation so that the shape of the display image when viewed from the eye box 200 does not change even if the inclination angle of the virtual image 301 changes. That is, the image processing unit 21 performs image processing according to the display space so that the shape of the display image when viewed from the user does not change even if the display space of the virtual image changes.

The display space detection unit 22 receives the information on the distance to the object around the vehicle, which has received by the vehicle control unit 4 from the periphery detection unit 3, and detects whether or not an obstacle is present in the displace space in the HUD device 2. Here, the display space refers to a region that is displayed and viewed in the real space by the virtual image 300 or the virtual image 301.

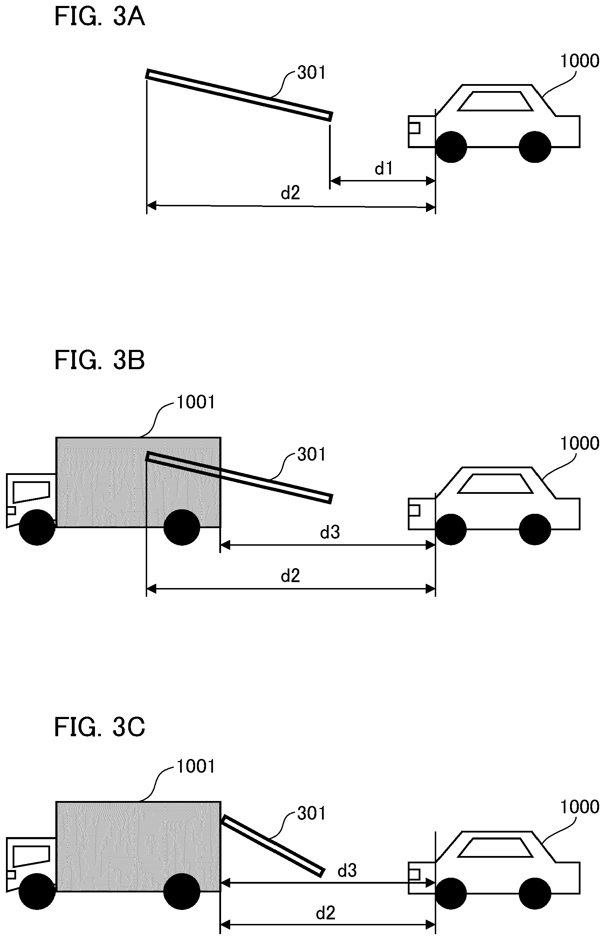

A specific example will be explained with reference to FIG. 3A. FIG. 3A to 3C are schematic views for explaining the conventional art and the first embodiment and show the outline of the processing in the conventional art and the first embodiment related to the virtual image inclination display performed by the HUD device 2. FIG. 3A is a side view of a state in which, in the vehicle 1000, the virtual image 301 in the HUD device 2 is displayed in an inclined manner.

The display space detection unit 22 detects the state of the display space, and when the display space detection unit 22 detects the presence of an obstacle, it supplies the distance to the obstacle to the display space control unit 24. The display space determination unit 23 determines the display position and the inclination angle of the virtual image to be displayed this time based on the detection result of the display space detection unit 22.

Note that the display space determination unit 23 executes a display space determination step of determining the display space of the virtual image displayed by the head-up display.

The display space control unit 24 generates control information of the mirror angle 30 of the second reflection mirror 13 and optical path control information so that the HUD display space does not overlap with the obstacle around the vehicle based on the result of the display space detection unit 22 and the result of the display space determination unit 23.

For example, the display space control unit 24 generates the control information of the mirror angle 30 of the second reflection mirror 13 and the optical path control information so that the HUD display space is formed in front of the obstacle around the vehicle. At this time, the upper end of the display space (virtual image) exists on the side closer to the vehicle side than the obstacle around the vehicle.

That is, when it is determined that an obstacle is present in the display space of the virtual image based on the state of the display space detected by the display space detection unit 22 and the display space determined by the display space determination unit 23, the display space control unit 24 controls the display space of the virtual image according to the distance (position) of the obstacle. Additionally, in the first embodiment, the mirror angle 30 of the second reflection mirror 13 is adjusted so that control of the display space of the virtual image is performed.

Additionally, the display space control unit 24 supplies a correction amount of the mirror angle 30 of the second reflection mirror 13 to the image processing unit 21. In the display driving unit 25, control of the mirror angle 30 and optical path control of the display device 10 are performed based on the control information of the mirror angle 30 of the second reflection mirror 13 and the optical path control information that have been generated by the display space control unit 24.

In a case in which no obstacle and the like are present in the forward direction, the virtual image 301 is displayed in an inclined manner as shown in FIG. 3A, and the virtual image 301 in the HUD device 2 is displayed so as to have a depth and a three-dimensional impression from the eye box 200 of the vehicle 1000.

Note that, at this time, the display space of the virtual image 301 corresponds to a space between the distance d1, which is from the mounting position of the HUD device 2 to the lower end of the virtual image 301, and the distance d2, which is from the mounting position of the HUD device 2 to the upper end of the virtual image 301, in the front-rear direction. Note that the width of the display space of the virtual image 301 in the right-left direction may be appropriately set according to the characteristics of the HUD device 2 or the speed of the movable apparatus.

Next, FIG. 3B illustrates a case in which an obstacle 1001 is present in the display region (display space) of the HUD device 2 when the HUD device 2 of the vehicle 1000 displays the virtual image 301. The distance from the mounting position of the HUD device 2 to the obstacle 1001 is denoted by "d3", and the distance from the mounting position of the HUD device 2 to the upper end of the virtual image 301 is denoted by "d2".

At this time, in the case of d3 < d2, since the virtual image 301 is immerged with the obstacle 1001, an inconsistency occurs in the distance between the virtual image and the reality, and as a result, the visual effects such as a sense of depth and a three-dimensional impression obtained in FIG. 3A are reduced.

Next, FIG. 3C is a diagram showing a state in which the display angle (inclination angle) of the virtual image 301 is changed so as not to immerge with the obstacle 1001 when the obstacle 1001 is present in the display region (display space) of the virtual image 301 of the HUD device 2 as shown in FIG. 3B.

By increasing the display angle (inclination angle) of the virtual image 301 such that the distances d3 and d2 described above satisfy d3> = d2, a display such that the virtual image 301 does not overlap the obstacle 1001 becomes possible. Note that, in the first embodiment, when the inclination angle of the virtual image 301 is increased, the distance d1 to the lower end of the virtual image 301 is not changed.

Note that in the case in which the display angle (inclination angle) of the virtual image 301 is increased, a display is performed after a projective transformation is performed on the display image by the above-described image processing unit 21 so that the shape of the display image by the HUD device 2 at the viewpoint of the eye box 200 of the vehicle 1000 does not change.

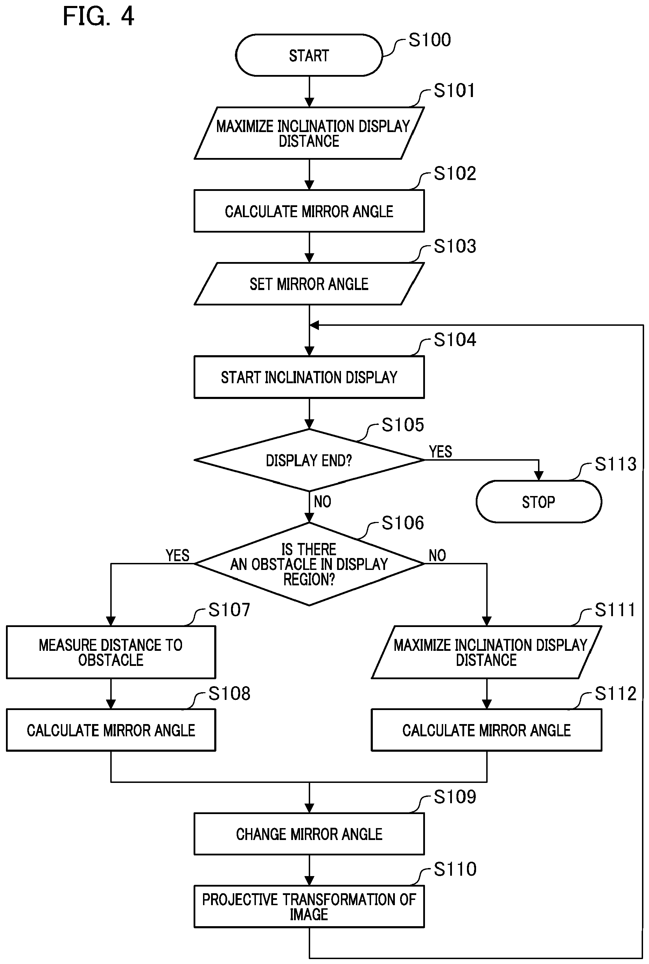

FIG. 4 is a flowchart illustrating an operation example of the display control method for the HUD device according to the first embodiment, and illustrates a flow for performing control such that the virtual image 301 does not immerge with the obstacle when the obstacle is present in the display region of the HUD device 2 as in FIG. 3C as described above.

Note that the CPU and the like serving as a computer in the HUD system executes a computer program stored in the memory to perform the operation of each step in the flowchart of FIG. 4.

First, the processing when the HUD system 1 is activated in steps 5100 to 5105 will be explained. In step S 100, the HUD system 1 is activated and the flow of FIG. 4 is started, for example, when an engine of the vehicle in which the HUD system 1 is mounted is started or when a power supply of the HUD system 1 is turned on by a user operation.

In step S101, the display space determination unit 23 acquires the maximum value of the inclination display distance of the virtual image 301 (corresponding to the distance d2 in FIG. 3) and stores the maximum value in the memory in the HUD system 1. In step S102, the display space control unit 24 calculates the mirror angle 30 of the second reflection mirror 13 based on the maximum value of the inclination display distance acquired in step S101.

Note that the mirror angle 30 of the second reflection mirror 13 can be acquired based on the maximum value of the inclination display distance by tabulating the relation between the mirror angle 30 and the inclination display distance of the virtual image 301 and storing the table in the memory in the HUD system 1. Note that the relation between the mirror angle 30 and the inclination display distance of the virtual image 301 may be stored as a function expression, and the mirror angle 30 may be calculated based on the function expression.

In step S103, the display driving unit 25 sets the mirror angle 30 of the second reflection mirror 13 calculated in step S102 and performs initial setting of the HUD system 1. In step S104, the processing during activation of the HUD system 1 is completed, and the HUD device 2 starts inclination display of the virtual image 301.

Note that, to prevent the display space in the HUD device 2 and the space in which the obstacle is present from overlapping each other, the order of the start of inclination display in step S104 and the processes of determining obstacles in the display space following step S106 may be reversed.

In step S105, the vehicle control unit 4 determines whether or not the display by the HUD system 1 is to be stopped, and when the display is to be ended, the display is stopped in step S113, and the flow of FIG. 4 is ended. That is, for example, when the engine of the vehicle in which the HUD system 1 is mounted is turned off, or when the power supply of the HUD system 1 is turned off by a user operation, the process proceeds to step S113.

In contrast, if the determination is "NO" in step S105, in steps S106 to S110, the processes corresponding to whether or not an obstacle is present in the display space in the HUD device 2 is performed. In step S106, when the display space detection unit 22 detects that an obstacle is present in the display space (display region) in the HUD device 2, the process proceeds to step S107, and if the determination is "NO", the process proceeds to step S111. Here, step S106 functions as a display space detection step of detecting a state of the display space.

In step S107, the display space control unit 24 acquires the distance d3 to the obstacle that has been measured by the periphery detection unit 3. In step S108, the display space control unit 24 calculates an angle of the second reflection mirror 13 so that the distance d2 satisfies d3 > d2 based on the distance d2 that is the maximum value of the inclination display distance of the virtual image 301.

The mirror angle 30 can be calculated from the distance d2 based on the function expression as described above, or can be acquired based on the table showing the distance d2 and the mirror angle 30 stored in the memory in advance.

In step S109, the display driving unit 25 changes the mirror angle 30 based on the angle of the mirror angle 30 acquired by the display space control unit 24 in step S108. In step S110, the image processing unit 21 performs projective transformation on the image to be displayed based on the mirror angle 30 acquired in step S109, and performs control such that the shape of the display image does not change from the eye box 200.

Note that, in the first embodiment, the inclination display distance of the mirror is maximized in step S111. Then, in step S112, the display space control unit 24 calculates the mirror angle 30 of the second reflection mirror 13 based on the maximum value of the inclination display distance, as in step S103. At this time, the mirror angle is calculated such that the virtual image has an inclination angle closest to the horizontal as shown in FIG. 3A.

However, if no obstacles are present in front, the display position of the virtual image and the inclination angle may be set arbitrarily according to a kind of the content, and there is no need to necessarily maximize the inclination display distance of the mirror. In other words, if no obstacles are present in front, there is no need to set restrictions on the display of the virtual image.

As described above, steps S107 to S109 function as a display space control step in which control of the display space of the virtual image is performed according to the position of the obstacle when it has been determined that the obstacle is present in the display space of the virtual image.

### [Second Embodiment]

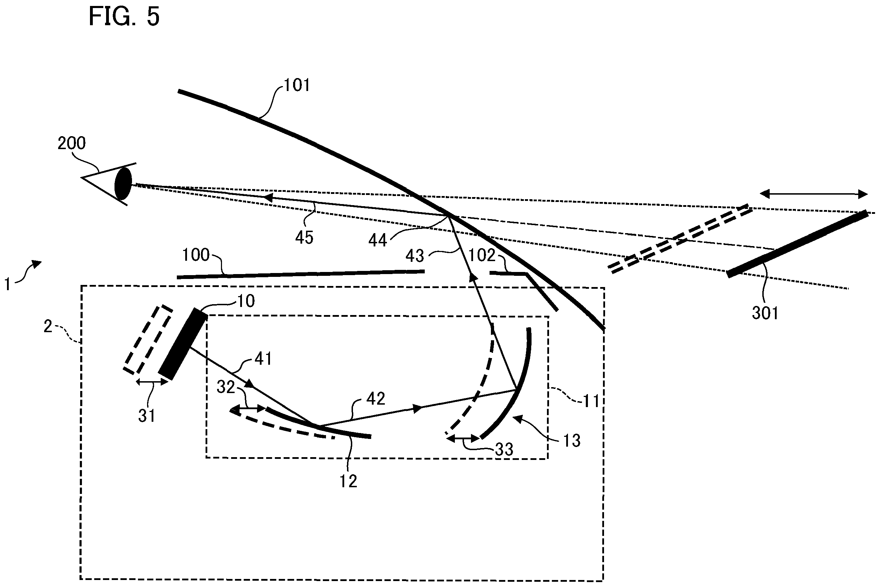

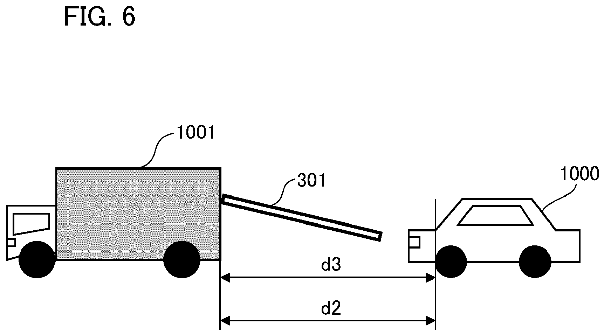

Next, the second embodiment of the present invention will be explained with reference to FIGs. 5 and 6. In the first embodiment, the obstacle is avoided by changing the display inclination angle of the virtual image 301, whereas in the second embodiment, the virtual image 301 is displayed while avoiding the obstacle by moving the display space forward and backward without changing the display inclination angle of the virtual image 301. That is, the position of the virtual image is moved forward and backward while maintaining the display inclination angle.

Regarding the configuration of the HUD system 1 according to the second embodiment, the difference from the first embodiment will be described with reference to FIG. 5. FIG. 5 is a schematic view of a multifocal HUD device according to the second embodiment. In the HUD device 2 according to the second embodiment, the display device 10, the first reflection mirror 12, and the second reflection mirror 13 are configured to be movable without changing each of the angles.

That is, the display device 10, the first reflecting mirror 12, and the second reflection mirror 13 can be driven by the display driving unit 25 so as to be moved while maintaining each of the angles. Additionally, the display device 10, the first reflecting mirror 12, and the second reflection mirror 13 are moved while being controlled so that a moving amount 31 of the display device 10, a moving amount 32 of the first reflection mirror 12, and a moving amount 33 of the second reflection mirror 13 are the same.

Accordingly, it is possible to move the display position without changing the inclination angle of the virtual image 301. Note that any configuration may be adopted as long as the display position can be shifted without changing the display inclination angle.

The display space control unit 24 calculates the moving amounts 31 to 33 based on the result of the display space detection unit and the result of the display space determination unit so that no obstacles are present between the display position of the virtual image of the HUD device 2 and a driver. In addition, the calculated movement amounts 31 to 33 are supplied to the image processing unit 21 and the display driving unit 25.

The display drive unit 25 moves the display device 10, the first reflection mirror 12, and the second reflection mirror 13 based on the moving amounts 31 to 33 calculated by the display space control unit 24. Other configurations of the HUD system 1 are similar to those of the first embodiment, and thus the description thereof will be omitted.

FIG. 6 is a diagram for explaining an operation of the HUD device according to the second embodiment and shows an example in which the drawback as shown in FIG. 3B is solved by the configuration of FIG. 5. That is, in FIG. 3B, the virtual image 301 overlaps with and immerges with the obstacle 1001, whereas the virtual image 301 that does not immerge with the obstacle 1001 is displayed by shifting the display space without changing the inclination angle of the virtual image 301 by using the configuration of FIG. 5 as described above.

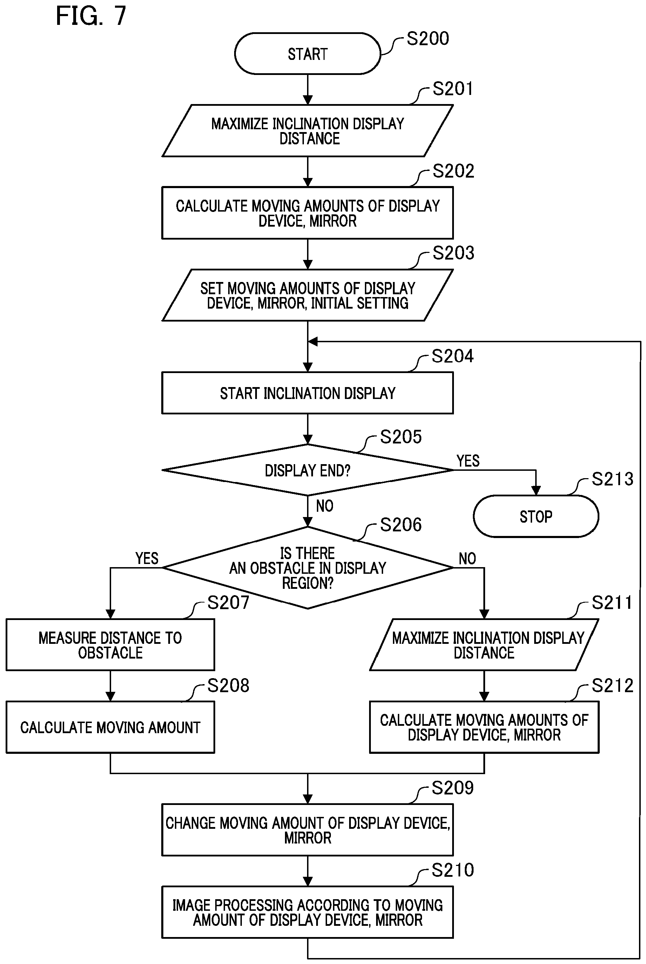

FIG. 7 is a flowchart illustrating an operation example of the display control method for the HUD device according to the second embodiment. In FIG. 7, the flow for shifting without changing the inclination of the virtual image 301 so that the virtual image 301 does not immerge with the obstacle in the case in which the obstacle is present in the display region of the HUD device 2 as shown in FIG. 3B described above is shown.

Note that a CPU and the like serving as a computer in the HUD system executes a computer program stored in a memory to perform the operation of each step in the flowchart of FIG. 7.

First, in steps S200 to S205, processes when the HUD system 1 is activated will be explained. Since the processes in steps S200 and S201 are similar to those in steps S100 and S101, the explanation thereof will be omitted.

In step S202, the display space control unit 24 calculates the moving amount 31 of the display device 10, the moving amount 32 of the first reflection mirror 12, and the moving amount 33 of the second reflection mirror 13 based on d2 corresponding to the maximum position of the inclination display distances that have been acquired in step S201.

As described above, the moving amounts 31 to 33 and the inclination display distance of the virtual image 301 are tabulated in advance and stored in the memory in the HUD system 1, so that the moving amounts 31 to 33 can be acquired based on the inclination display distance. Note that the moving amount may be stored in advance as a function as described above and calculated based on the function.

In step S203, the display driving unit 25 sets the moving amount 31 of the display device 10, the moving amount 32 of the first reflection mirror 12, and the moving amount 33 of the second reflecting mirror 13, which have been calculated in step S202, and performs initial setting of the HUD system 1. Note that step S204, step S205, and step S213 are respectively the processes similar to step S104, step S105, and step S113, and thus an explanation thereof will be omitted.

Next, in steps S206 to S210, processes according to whether or not an obstacle is present in the display space in the HUD device 2will be explained. In step S206, when it has been detected by the display space detection unit 22 that an obstacle is present in the display space (display region) in the HUD device 2, the process proceeds to step S207, and if the detection result is "NO", the process proceeds to step S211.

In step S207, the display space control unit 24 acquires the distance d3 to the obstacle measured by the periphery detection unit 3. In step S208, the display space control unit 24 calculates the moving amounts 31 to 33 such that the distances d2 to the virtual image 301 satisfy d3> = d2.

The moving amounts 31 to 33 are calculated from the distance d2 based on the function expression as described above, or are acquired from a memory in which the distance d2 and the mirror angle 30 are tabulated and stored in advance. Thus, in the second embodiment, the position of the light reflecting portion is adjusted so that control of the display space of the virtual image is performed.

In step S209, the display driving unit 25 shifts the display device 10, the first reflection mirror 12, and the second reflection mirror 13 based on the moving amounts 31 to 33 acquired by the display space control unit 24 in step S209.

In step S210, the image processing unit 21 performs projective transformation on the image to be displayed based on the moving amounts 31 to 33 and performs control such that the shape of the display image when viewed from the eye box 200 does not change. Steps S211 to S212 are the processes similar to steps S201 to S202, and thus the explanation thereof will be omitted.

Note that as described above, when no obstacle is present in the forward direction, the display position and the inclination angle of the virtual image may be arbitrarily set according to the details of the content, and it is not always necessary to maximize the inclination display distance of the mirror. In other words, if no obstacles are present in front, there is no need to set restrictions on the display of the virtual image.

Note that the flow of FIG. 4 and the flow of FIG. 7 may appropriately be combined. That is, for example, in a case in which the distance d3 of the front vehicles is between a predetermined value x1 and a predetermined value x2 (here, x1> x2), the display position of the virtual image may be shifted to the front side without changing the display inclination angle as in the flow of FIG. 7 according to a decrease in the distance d3. In addition, in a case in which the distance d3 is equal to or less than a predetermined value x2, the display inclination angle may be increased according to a decrease in the distance d3, as in the flow of FIG. 4.

Alternatively, when the length d3 is equal to or less than the predetermined value x1, the position of the virtual image may be shifted to the near side by gradually shortening the distance d1 to the lower end of the virtual image 301 while gradually increasing the display inclination angle, as in the flow of FIG. 4, as the distance d3 decreases.

Note that it is sufficient in the embodiment as described above that at least one of the position and angle of the light reflecting portion is adjusted to control the display space of the virtual image. Additionally, it is sufficient that at least one of the position and angle of the light source for the display light projected on the light reflecting portion is adjusted to control the display space of the virtual image. It is sufficient if at least one of the position and angle of the virtual image is changed accordingly.

### [Third Embodiment]

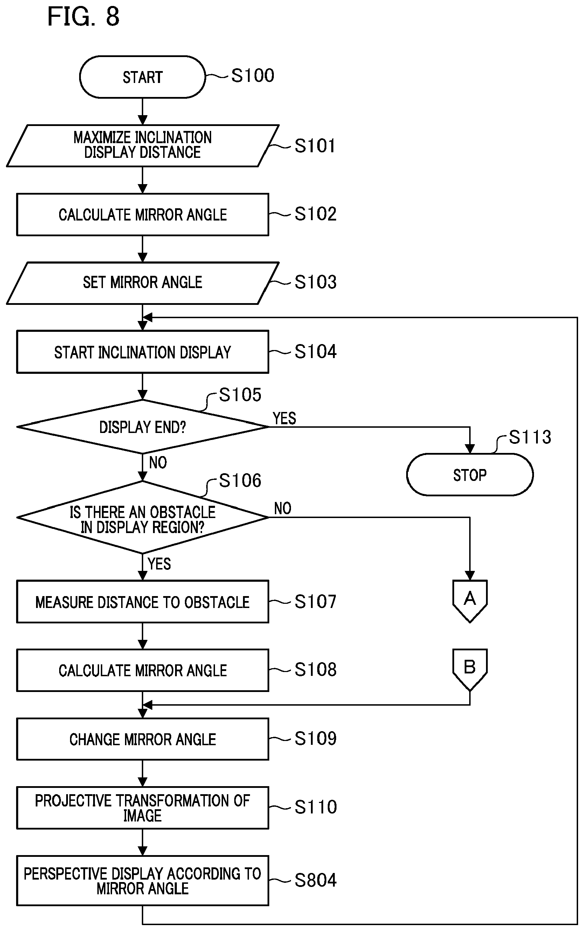

Next, the third embodiment of the present invention will be described with reference to FIG. 8 to FIG. 10. In the first embodiment, since a display is performed in such a manner that the display angle of inclination of the virtual image 301 is changed to avoid obstacles and the like, and the virtual image is displayed with the display angle of inclination raised, there is a concern that a sense of perspective is lost.

In contrast, in the third embodiment, the display content of the virtual image 301 is displayed in such a manner that the perspective is emphasized based on the perspective, in response to raising the display inclination angle of the virtual image 301. As a result, the perspective of the virtual image is not lost.

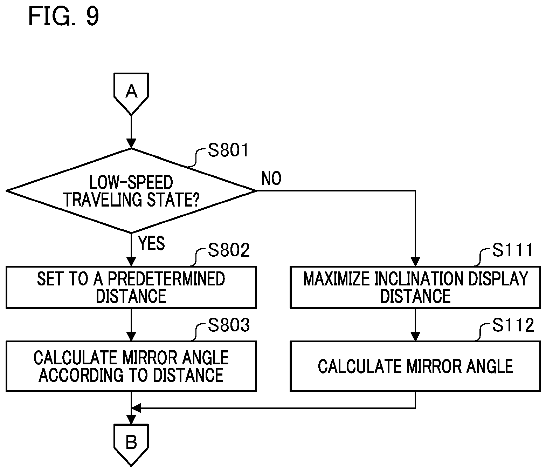

FIG. 8 is a flowchart showing an operation example of the display control method for the HUD device according to the third embodiment, and FIG. 9 is a flowchart showing a continuation of FIG. 8. Note that the operation of each step of the flowcharts in FIG. 8 and FIG 9 is performed by a CPU and the like serving as a computer in the HUD system executing a computer program stored in a memory.

In the third embodiment as shown in FIG. 8, in a case in which an obstacle is present in the display region of the HUD device 2 as shown in FIG. 3B as described above, the inclination angle of the virtual image in the depth direction is raised so that the virtual image 301 does not immerge with the obstacle. Additionally, correction of the display image is performed by the image processing unit 21, based on perspective according to the inclination angle (for example, emphasizing a sense of perspective).

That is, the display image is corrected by the image processing unit 21 based on perspective according to the inclination angle in the depth direction of the display space. Note that, in FIG. 8 and FIG. 9, the same reference numerals as those in FIG. 4 denote the same processes, and the explanation thereof will be omitted.

First, in steps S200 to S205, processes when the HUD system 1 is activated will be described. Since the processes in steps S200 and S201 are similar to those in steps S 100 and S101, the explanation thereof will be omitted.

In step S106, when it is detected by the display space detection unit 22 that an obstacle is present in the display space (display region) of the HUD device 2, the process proceeds to step S107, and if the detection result is "NO", the process proceeds to step S801 of FIG. 9 via A of FIG. 8.

In step S801, it is determined whether or not an automobile serving as a movable apparatus is in a low-speed traveling state at a speed equal to or lower than a predetermined speed. Here, in step S801, for example, a speed of the automobile serving as a movable apparatus is acquired from the car control unit 4 to determine the speed.

Note that, for example, a Global Positioning System (GPS) (not illustrated) may be used to detect the position of an automobile serving as a movable apparatus, and if it is detected, for example, that the automobile is traveling in an urban area, the determination result may be "YES". Alternatively, if it is detected that the automobile is traveling on an expressway, the determination result may be "NO".

Alternatively, the speed limit information of the road on which the automobile is traveling may be acquired based on both the GPS and the map database, and when the speed limit is equal to or lower than the predetermined speed, the determination result may be "YES". Alternatively, a sign regarding the speed limit in the image may be image-recognized based on the image of the camera for capturing surroundings such as the front of the automobile serving as a movable apparatus, and when the speed limit of the sign is equal to or less than a predetermined speed, the determination result may be "YES".

When the determination result is YES in step S801, the process proceeds to step S802, and when the determination result is NO, the process proceeds to step S111. In step S802, the display position of the virtual image (for example, the distance d1 to the lower end of the virtual image 301, or the distance to the center position between the upper end and lower end of the virtual image 301) is set to a specified distance.

At this time, for example, a preset fixed value may be used. Alternatively, the display position (distance) of the virtual image may be set according to a traveling speed of the automobile. That is, the display position (distance) of the virtual image may be shortened as the speed of the automobile is lower.

Next, in step S803, the mirror angle corresponding to the distance of the virtual image is calculated. That is, in a case in which the display position (range) of the virtual image set in step S802 is shorter than a predetermined distance, calculation is performed such that the inclination angle of the mirror is set to be larger than that in a case in which the display position (range) of the virtual image is farther than the predetermined distance.

At this time, in step S802, in the case in which the display position (distance) of the virtual image is set according to the traveling speed of the automobile, the inclination angle of the mirror may be changed continuously or stepwise according to the display position (distance) of the virtual image. That is, in this case, the inclination angle of the mirror is changed to be raised continuously or stepwise as the display position (distance) of the virtual image becomes closer. Subsequently, the process proceeds to step S109 through B of FIG. 9.

As described above, in the third embodiment, it is determined whether or not the movable apparatus is in the low-speed traveling state according to at least one of the speed, the position, and the surrounding situation of the movable apparatus on which the display system is mounted, and the display space (the position, the inclination angle, and the like) of the virtual image is determined according to the determination result.

Note that when it is determined in step S801 that the determination result is "NO", in step S111, the inclination display distance of the mirror is maximized. In addition, in step S112, the display space control unit 24 calculates the mirror angle 30 of the second reflection mirror 13 based on the maximum value of the inclination display distance, as in step S103. At this time, the mirror angle is calculated such that the virtual image has an inclination angle closest to the horizontal as shown in FIG. 3A.

Subsequently, the process proceeds to step S109 through B of FIG. 9. Note that as described above, when no obstacle is present in front, the display position and the inclination angle of the virtual image may be arbitrarily set according to the details of the content, and it is not always necessary to maximize the inclination display distance of the mirror. In other words, if no obstacles are present in front, there is no need to set restrictions on the display of the virtual image.

In step S109, the display driving unit 25 changes the mirror angle 30 based on the angle of the mirror angle 30 acquired by the display space control unit 24 in step S108. In step S110, the image processing unit 21 performs projective transformation on the image to be displayed based on the mirror angle 30 obtained in step S109.

Furthermore, in the third embodiment, the process proceeds to step S804 after step S110, and perspective display according to the inclination angle of the mirror (that is, the display inclination angle) is performed. Here, step S804 functions as an image processing step in which the display image is corrected by perspective according to the inclination angle of the display space.

That is, since a sense of perspective is lost as the inclination angle in the depth direction of the display space increases as shown in FIG. 3C compared to the state in FIG. 3A, the display image is corrected and displayed to emphasize a sense of perspective of the displayed image (virtual image 301) based on the perspective.

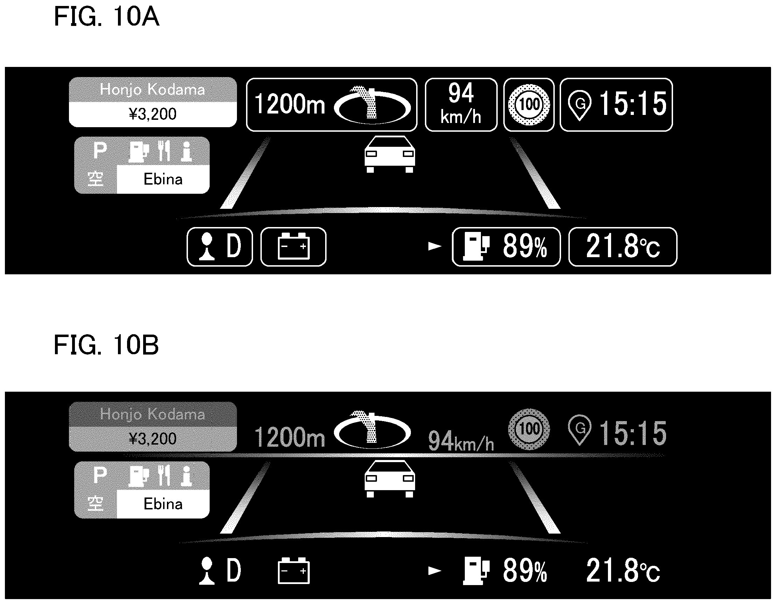

FIGs. 10A and 10B are diagrams illustrating an example in which the perspective of the virtual image 301 is emphasized based on the perspective. FIG. 10A is a diagram illustrating a display example in a case in which the perspective of the virtual image 301 is not emphasized based on the perspective, and FIG. 10B is a diagram illustrating a display example in a case in which the perspective of the virtual image 301 is emphasized based on the perspective. In the example of FIG. 10B, the perspective is emphasized by performing display such that the display brightness in the depth direction, that is, on the upper side of the virtual image, gradually becomes lower than the display brightness on the lower side of the virtual image.

Note that although, in the third embodiment, in the case in which the display inclination angle is raised, the perspective of the virtual image 301 is emphasized based on the perspective as described above. However, the perspective is not limited to this example, and any method may be used as long as the perspective is emphasized.

For example, the perspective may be a method for displaying an object to be displayed on the front side (lower side of the virtual image) in a large size and an object to be displayed on the back side (upper side of the virtual image) in a small size as in a line perspective method (perspective drawing method) so that parallel lines extending in the depth direction intersect at a vanishing point. Alternatively, the perspective method may be a method for displaying an object to be displayed on the front side (lower side of the virtual image) so as to overlap an object to be displayed on the back side (upper side of the virtual image) as in a superimposed perspective method.

Alternatively, perspective may be provided by increasing the definition of an object on the near side (on the lower side of the virtual image) and decreasing the definition of an object on the far side (on the upper side of the virtual image) as in aerial perspective, or perspective may be provided by using color characteristics as in chromatic perspective. Additionally, a light bluish-purple gradation, which is a receding color, may be applied from the front (the lower side of the virtual image) to the back (the upper side of the virtual image).

In addition, for example, a vanishing perspective in which the transmittance is increased from the near side (the lower side of the virtual image) to the far side (the upper side of the virtual image) may be used. There are a curvilinear perspective, an oblique perspective, a vertical perspective, and the like, any type of perspective may be used in the third embodiment, and at least one of, for example, a chromatic perspective, an aerial perspective, and a vanishing point perspective is desirable.

However, in the case in which perspective is used to emphasize the sense of perspective, the content having higher importance or urgency such as warning display may be displayed so that they stand out without using perspective, irrespective of the placement position within the virtual image. Note that, in the third embodiment, it is desirable to display the content having higher importance or urgency such as a warning display, among various contents of the virtual image of which the perspective is emphasized and displayed by perspective, on the front side (lower side of the virtual image).

That is, it is desirable that, as the display inclination angle of the virtual image is larger, perspective is emphasized and displayed by using perspective, and a content having higher importance or urgency among the contents of the virtual image is displayed on the front side (lower side of the virtual image), and conversely, a content having lower importance or urgency is displayed on the back side (upper side of the virtual image).

Note that, in the explanation as described above, the image processing is performed such that a sense of perspective of the content of the virtual image display is emphasized based on the perspective as the display inclination angle is larger. However, conversely, the image processing may be performed such that a sense of perspective of the content of the virtual image display is weakened based on the perspective as the display inclination angle is decreased.

While the present invention has been described with reference to exemplary embodiments, it is to be understood that the invention is not limited to the disclosed exemplary embodiments. The scope of the following claims is to be accorded the broadest interpretation to encompass all such modifications and equivalent structures and functions.

In addition, as a part or the whole of the control according to the embodiments, a computer program realizing the function of the embodiments described above may be supplied to the display system through a network or various storage media. Then, a computer (or a CPU, an MPU, or the like) of the display system may be configured to read and execute the program. In such a case, the program and the storage medium storing the program configure the present invention.

Additionally, the present invention includes an implementation realized using at least one processor or circuit configured to function of the embodiments explained above. Note that a plurality of processors may be used for distributed processing.

This application claims the benefit of Japanese Patent Application No. 2022-187890, filed on November 25, 2022, which is hereby incorporated by reference herein in its entirety.

A display system comprising: a head-up display that projects a display image on a light-reflecting portion and displays a virtual image by light reflected on the light-reflecting portion; a display space determination unit configured to determine a display space of the virtual image displayed by the head-up display; and an image processing unit configured to correct the display image based on perspective according to an inclination angle in a depth direction of the display space.

## Claims

1. A display system comprising:
a head-up display that projects a display image on a light-reflecting portion and displays a virtual image by light reflected on the light-reflecting portion; and
at least one processor or circuit configured to function as:
a display space determination unit configured to determine a display space of the virtual image displayed by the head-up display; and
an image processing unit configured to correct the display image based on perspective according to an inclination angle in a depth direction of the display space.

2. The display system according to Claim 1, wherein the image processing unit performs correction so as to emphasize the perspective of the display image as the inclination angle of the display space increases.

3. The display system according to Claim 1, wherein the at least one processor or circuit is further configured to function as,
a display space detection unit configured to detect a state of the display space,
wherein the display space determination unit determines a position or an inclination angle of the virtual image in the display space according to the state of the display space detected by the display space detection unit.

4. The display system according to Claim 3, wherein, in a case in which the display space detection unit determines that an obstacle exists in the display space of the virtual image, the display space determination unit determines the display space of the virtual image according to a distance to the obstacle.

5. The display system according to Claim 1, wherein the display space determination unit determines the display space of the virtual image according to at least one of a speed, a position, and a surrounding situation of a movable apparatus on which the display system is mounted.

6. The display system according to Claim 1, wherein the perspective includes at least one of a chromatic perspective, an air perspective, and a vanishing point perspective.

7. The display system according to Claim 1,
wherein the at least one processor or circuit is further configured to function as
a display space control unit configured to change at least one of a position and an angle of the virtual image so that the display space of the virtual image determined by the display space determination unit is controlled.

8. The display system according to Claim 7, wherein the display space control unit controls at least one of a position and an angle of the light-reflecting portion.

9. The display system according to Claim 7, wherein the display space control unit controls at least one of a position and an angle of a light source of display light projected on the light-reflecting portion.

10. A display control method for a head-up display that projects a display image on a light-reflecting portion and displays a virtual image by light reflected on the light-reflecting portion, the display control method comprising:
determining a display space of the virtual image displayed by the head-up display; and
performing image processing of correcting the display image based on perspective according to an inclination angle of the display space.

11. A non-transitory computer-readable storage medium storing a computer program including instructions for executing a display control method for a head-up display that projects a display image on a light-reflecting portion and displays a virtual image by light reflected by the light-reflecting portion, the display control method comprising:
determining a display space of the virtual image displayed by the head-up display; and
performing image processing of correcting the display image based on perspective according to an inclination angle of the display space.
